Europäisches Patentamt

European Patent Office

Office européen des brevets

(19)

(11) EP 0 700 866 A1

(12) EUROPEAN PATENT APPLICATION

(43) Date of publication:
13.03.1996 Bulletin 1996/11

(51) Int Cl.$^6$: C01B 3/44, B01J 8/24

(21) Application number: 95306041.5

(22) Date of filing: 30.08.1995

(84) Designated Contracting States:
DE FR GB IT NL

(30) Priority: 06.09.1994 US 301208

(71) Applicant: EXXON RESEARCH AND
ENGINEERING COMPANY
Florham Park, New Jersey 07932 (US)

(72) Inventors:
• Kaiser, Frederick John Jr.
Morris Plain, New Jersey 07950 (US)
• Wilcox, Gerald Allen
Baton Rouge, Louisiana 70815 (US)

(74) Representative: Somers, Harold Arnold et al
ESSO Engineering (Europe) Ltd.
Patents & Licences
Mailpoint 72
Esso House
Ermyn Way
Leatherhead, Surrey KT22 8XE (GB)

(54) Fluidized bed synthesis gas production process

(57) A synthesis gas process is described in which agglomerated catalyst, or mixture of catalyst and a solids diluent, are treated _ex situ_. The solids are withdrawn from the fluidized bed reactor, crushed and broken apart, and a solids fraction of selected particle size distribution is recycled to the reactor at rate sufficient to balance the intrinsic rate of agglomeration of solids particles in the reactor.

EP 0 700 866 A1

## Description

This invention relates to a fluidized bed synthesis gas process, more especially to the amelioration of catalyst agglomeration therein.

Fluidized bed processes are known to provide superior heat and mass transfer characteristics as contrasted with fixed bed processes. They permit substantially isothermal reactor conditions in conducting both exothermic and endothermic reactions.

Particulate refractory inorganic oxide solids, e.g. alumina, have been employed for many years as catalyst supports, or catalyst diluents to control the heats of reaction. For example, in the production of synthesis gas (hydrogen and carbon monoxide), a low molecular weight hydrocarbon(s) (e.g. $CH_4$ or natural gas) is fed into the bottom of a reactor containing a mixture of catalyst, e.g. a nickel-on-alumina catalyst, and a solids diluent, e.g. alumina, to form a fluidized bed of the catalyst and the solids diluent. Steam is introduced into the reactor. Oxygen is fed into the fluidized bed through nozzles separate from those through which the natural gas is fed. The oxygen reacts with a portion of the natural gas in a zone near the oxygen inlet according to the following partial oxidation reaction:

$$(1) \qquad CH_4 + O_2 = CO + H_2 + H_2O \text{ (Partial Oxidation)}$$

This is a strongly exothermic reaction and produces localized hot spots and burning near the $O_2$ nozzle, or nozzles; the high temperature area around the $O_2$ nozzle constituting a burning zone. The natural gas that does not react directly with the $O_2$ ascends through the reactor where it undergoes a steam reforming reaction to produce hydrogen and carbon monoxide according to the following reaction:

$$(2) \qquad CH_4 + H_2O = CO + 3H_2 \text{ (Steam Reforming)}$$

The steam reforming reaction is highly endothermic, but by having good solids circulation in the fluidized bed, the overall bed temperature becomes quite uniform. The net. or overall reaction (the sum of reactions (1) and (2), supra), described as follows, is slightly exothermic.

$$(3) \qquad 2CH_4 + O_2 = 2CO + 4H_2 \text{ (Overall)}$$

The overall reactions occur in a net reducing atmosphere.

A water gas shift reaction also occurs in the bed; a very rapid reaction which produces only minor heat effects.

$$(4) \qquad CO + H_2O = CO_2 + H_2 \text{ (Water Gas Shift)}$$

The exothermic heat of reaction produced by the oxygen causes burning and severe localized heat near the oxygen inlet zone; but despite the good heat transfer in the fluid bed the high temperature produces net agglomeration of the catalyst, or catalyst and other solids. The high localized flame temperature produced by the oxygen in the burning zone of the bed can exceed the melting point of the alumina, or at least produce temperatures which cause the surface of the alumina particles to melt, stick and fuse together as the particles repetitively collide on recycle through the burning zone of the bed. The amount of agglomeration increases with time which adversely affects the reaction characteristics of the bed, and the activity of the catalyst generally declines. The active catalytic sites can become inaccessible to the reactants due to the agglomeration. In addition, the overall increase in the average particle size of the fluidized bed produces larger bubbles in the bed; a phenomenon which causes further drop in the $CH_4$ conversion due to increased mass transfer resistance. As a result thereof, the quality of fluidization becomes increasingly poorer, and fluid bed temperatures become increasingly non uniform; qualities which decrease the amount of $CH_4$ conversion. In addition, bed vibration can increase due to the poor fluidization characteristics; a phenomenon which can lead to a loss in the mechanical integrity of the equipment.

### 3. Summary of the Invention

The present invention relates to the _ex situ_ breaking apart, and grinding of the agglomerating, or agglomerated catalyst, or catalyst and solids diluent, as part of a process combination for forming a synthesis gas, or reaction product mixture of hydrogen and carbon monoxide, by contact of a low molecular weight hydrocarbon feed, an oxygen feed, and a steam feed with a fluidized bed of a catalytic metal-on-alumina catalyst, or mixture of catalyst and a solids diluent. The process is operated at net reducing conditions, but with oxidizing zones at high temperature sufficient to agglomerate the catalyst, or catalyst and diluent solids, the particle surfaces of which melt and stick together to form agglomerates of increasing size and great strength as they are repetitively recycled through the oxidation zones. The mechanical strength of the particles, a value which can be expressed in terms of the Davison Attrition Index, D.I., is generally less than about 6; with the Davison Attrition Index most often ranging after about five days of continuous operation from about 1.5 D.I. to about 2.5 D.I., and after about five and fifteen days of continuous operation from about 0.5 D.I. to about 2 D.I.

The Davison Index, D.I., is determined by an attrition index method based on that developed by Davison Chemical Division of W.R. Grace & Company. The method uses a jet cup attrition technique that reports as the D.I. the wt% of < 20 µm fines produced in a controlled attrition test. The D.I. test apparatus consists of two main vessels, the attrition vessel and the elutriation vessel. The attrition and elutriation vessels have diameters of 9 in. and 4.5 in., respectively. Each vessel is 24 in. high and has a cone shaped bottom that slopes about 15° from vertical. The jet cup attritor which holds the sample for attrition attaches to the bottom of the attrition vessel and is 1.03 in. I.D. by 2 in. deep. A 0.0625 in. diameter hole forms the jet that enters the cup's wall horizontally and is tangent to the inside wall and bottom of the cup. A sample $6 \pm 0.3$ g is attrited for 20 minutes with $N_2$ (35% relative humidity) at a flow rate of about 21 Liters/minute, L/min (this flow rate is fine-tuned to give a D.I. of $27 \pm 2$ for a standard CZB-1 Davison catalyst). Fines (wt 1) escaping the attrition vessel are collected in an extraction thimble. After the attrition the sample is transferred to the elutriation unit to separate the remainder of the <20 µm fines from the sample. The sample is placed in a cup with similar dimensions to the jet cup but with a sintered metal distributor at the bottom to uniformly fluidize the sample in the elutriator. This cup with the attrited sample is connected to the bottom of the elutriator, and the sample is elutriated for 20 min with $N_2$ (35% relative humidity) at 9 L/min. The elutriation removes the <20 µm fines from the sample to give a remaining coarse fraction (wt 3). The elutriated fines (wt 2) are collected in an extraction thimble connected to the exit of the elutriation vessel. In a separate measurement, the wt% of <20 µm fines (% Pre Att) is determined in a fresh sample. The D.I. which represents the wt% of <20 µm fines formed by the attrition is calculated from the expression

$$D.I. = \frac{\frac{[(wt\ 1) + (wt\ 2)]}{[(wt\ 1) + (wt\ 2) + (wt\ 3)]} * 100 - (\%\ Pre\ Att)}{100 - (\%\ Pre\ Att)} * 100$$

The particulate solids withdrawn from the fluidized bed of the reaction zone are crushed and broken apart to produce particles of smaller average particle size distribution, and all or a fraction of these particles, generally a fraction, is recycled to the bed at a rate sufficient to balance the intrinsic rate of agglomeration of the catalyst, or catalyst and solids to create, and maintain the desired particle size distributions within the reaction zone; the intrinsic rate of agglomeration being a function of several variables which include: reactor temperature, reactor pressure, the amount of oxygen fed into the reactor and the amount of dilution thereof, if any, with steam or other gaseous diluent, and the nature of the solids. A stream of catalyst, or catalyst and other solids, is thus withdrawn from the fluidized bed, cooled, the aggregated solids crushed and broken apart to provide a particle fraction of smaller average diameter size distribution, which is then recycled to the fluidized bed to maintain therein particles from about 80 percent to about 95 percent of which are of diameters ranging from about 20 microns to about 130 microns, preferably from about 30 microns to about 110 microns, based on the weight of bed solids.

The intensity of the temperature in the burning zone, or zone wherein the oxygen is injected, it has been found, can be moderated and reduced to a significant degree by dilution of the oxygen with a gas which is inert or non reactive in the reaction, or which is innocuous in its effect on product distribution and heat release, e.g. hydrogen, steam, and carbon oxides, notably carbon dioxide. Steam, one of the process feeds, is a particularly preferred diluent for admixture with the required oxygen fed into the process. Suitably a portion of the steam normally added with the low molecular weight hydrocarbon and oxygen to the process is adequate to moderate and control the temperature of the burning zone; a preferred dilution of the process oxygen providing a molar ratio of diluent:oxygen, or steam:oxygen, ranging from about 0. 1:1 to about 0.6:1, more preferably from about 0.3:1 to about 0.5:1. Preferably, where steam is added as a diluent, the balance of the steam needed in the process is admixed with the low molecular weight hydrocarbon and fed to the reaction zone.

In the preparation of catalyst, or catalyst and solids particles of desired, or optimum particle size distribution for recycle to the fluidized bed of the reaction zone, the stream of catalyst, or catalyst and other solids withdrawn from the fluidized bed of the reaction zone can be (a) fed directly into a solids grinder, e.g. a roller mill or fluidized bed jet mill, to the bottom of which is supplied a sweep gas, e.g. air or nitrogen, which removes particles of selected size distribution range as particles are crushed and broken apart via an overhead effluent which is passed to gas-solid, solid-solid separation equipment and separated into gas, fines and ground solids of preselected particle size distribution, the latter of which is recycled to the fluidized bed of the reaction zone; (b) or the withdrawn catalyst, or catalyst and other solids withdrawn from the fluidized bed of the reaction zone can be first classified according to particle sizes and only the coarse solids of preselected particle size crushed, ground, and treated as in (a), supra, to produce the ground solids of preselected particle size distribution for recycle to the fluidized bed of the reaction zone; (c) or the catalyst, or catalyst and other solids withdrawn from the fluidized bed of the reaction zone can be processed via multiple passes between a grinder and classifier, and the catalyst ground to produce a fraction of desired, or optimum particle size distribution for recycle from the classifier to the fluidized bed of the reaction zone. The advantage of these procedures is that fines production during the operation is minimized. Fines, of course, cannot be retained in the fluid bed and thus represent a loss of expensive catalytic solids, and pollutant to downstream operation.

Generally, from about 0.005 pounds per day (lbs/day) to about 0.25 lbs/day, preferably from about 0.01 lbs/day to about 0.1 lbs/day per lb. of fluidized bed solids, is withdrawn from the fluidized bed, and this material is crushed and ground to produce solids of smaller average particle size distribuiton; particle size distribution wherein no more than about 0 percent to about 15 percent of the particles are of particle diameter greater than 90 microns, and preferably no more than about 1 percent to about 6 percent, based on the total weight of the withdrawn solids fraction, are of particle diameter greater than 90 microns. Solids of smaller average diameter than about 38 microns may be separated as fines from the withdrawn fraction, and the coarser solids of the fraction are recycled to the fluidized bed of the reactor. Conversely, the fines may be recycled to the reactor, and separated from the process at the reactor. Make up solids are added to the reactor to compensate for the loss of solids as fines. In crushing the solids withdrawn from the reaction zone, generally from about 0.01 to about 0.1 pound, per pound of withdrawn solids, are destroyed or lost from the process as waste, i.e. particulate solids <38 microns average diameter. More often, and preferably, no more than about 0.02 to about 0.06 pound, per pound of withdrawn solids, are destroyed or lost from the process as waste. Thus, conversion of the solids to fines generally ranges no more than about 0.1 pound, per pound of solids withdrawn from the fluidized bed. And, typically from about 0.90 lbs to about 0.99 lbs, per pound of withdrawn solids, are recycled to the fluidized bed of the reaction zone, and from about 0.01 lbs to about 0.1 lbs of additional solids, per pound of withdrawn solids, are added at the reactor to make up for fines loss.

The invention, and the principle of operation, will be more fully understood by reference to the following detailed description of specific and preferred embodiments, and to the attached drawings to which reference is made in the description. In the different views, identical numbers are used to designate corresponding parts, or components.

### 4. Reference to the Drawing

Figure 1 depicts, in flow diagram format, a preferred process for the practice of this invention. In this figure, the numeral 10 refers to the synthesis gas reactor, the numeral 20 refers to a grinder which receives solids withdrawn from the reactor, and the numeral 30 to gas-solid, solid-solid separation equipment associated with the grinder;

Figure 2 depicts, in flow diagram format, an alternate process scheme for processing solids withdrawn from the reactor; and

Figure 3 depicts, in flow diagram format, another process scheme for processing solids withdrawn from the reactor.

### 5. Detailed Description of the Invention

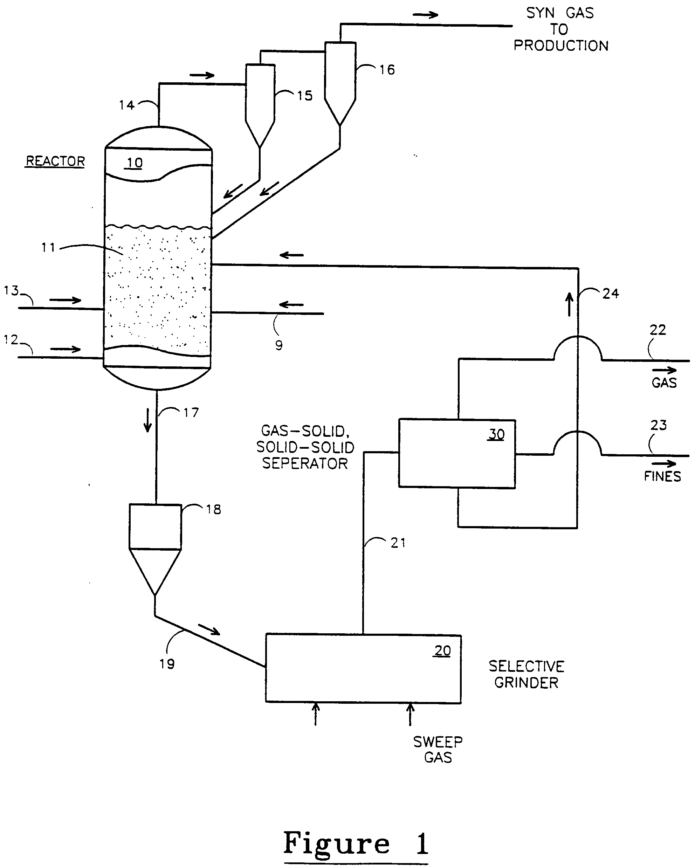

Referring to Figure 1, synthesis gas is produced in the reactor 10 in which is contained a bed 11 of fluidized catalyst, e.g. a nickel-on-alumina catalyst. or catalyst admixed with a solids diluent, e.g. alumina. to which low molecular weight hydrocarbons, oxygen (or oxygen-containing gas, e.g. air) and steam are fed to produce both partial oxidation and steam reforming reactions. Light hydrocarbons, preferably preheated, $C_1$-$C_4$ alkanes, predominantly methane, e.g. natural gas, diluted with steam, is fed via line 12 into the bottom of the reactor 10. Oxygen, which may also be preheated, diluted with steam, is fed into the bottom of the reactor 10 via line 13 located above line 12. Make up catalyst, or catalyst and solids, is added to the reactor, e.g. via line 9. Heat is transferred from the exothermic partial oxidation zone of the bed 11 to the endothermic reforming zone located in the upper portion of the bed 11. Pressures within the reaction zone range from about 20 atmospheres to about 40 atmospheres. Average temperatures generally range from about 1500°F to about 1900°F, preferably from about 1600°F to about 1800°F. In the overall reaction, the reactor is operated at net reducing conditions. The exothermic reaction between oxygen and natural gas, which forms a burning zone at the location(s) of oxygen injection, however, produces localized temperatures near the inlet line 13 which can range several hundred Fahrenheit degrees higher than average as a consequence of which the surface of the alumina particles on repetitive recycle through the burning zone melt, stick and fuse together to form agglomerates; the agglomerated particles within the reactor reaching a hardness level, as measured by the Davison Attrition Index, D.I., less than about 6, generally ranging from about 1.5 D.I. to about 2.5 D.I., or more generally from about 0.5 D.I. to about 2.0 D.I., after several days of operation.

The catalyst of the fluidized bed 11 is preferably one which contains from about 1 percent to about 20 percent nickel, preferably from about 5 percent to about 10 percent nickel based on the weight of the catalyst, composited with an alpha alumina support. The fluidized bed may also contain a particulate solids diluent to disperse heat, suitably a high purity alpha alumina. Generally, the bed is constituted of from about 10 percent to about 99.9 percent, preferably from about 80 percent to about 99.5 percent, of the solid diluents component and from about 0.1 percent to about 90 percent, preferably from about 0.5 percent to about 20 percent, of the catalyst, based on the total weight of the particulate solids constituting the fluidized bed. A hydrogen and carbon monoxide product, steam, some unconverted hydrocarbons and other materials exit overhead line 14 where it is sent to gas-solids separations, suitably one, two or more cyclone separators, e.g. cyclone separators 15, 16 which trap some of the catalyst particles and fines, returning them via their respective diplegs to the reactor. The diameter of the particles constituting the fluidized bed generally ranges from about 20 microns to about 130 microns.

A stream of catalyst, or catalyst and other solids particles is withdrawn from the bottom of reactor 10 via line 17 into the spent solids hopper 18, and then transported to the selective grinder 20. A sweep gas is introduced into the bottom of the grinder 20 (as represented by the arrows), and a gas-solids effluent is removed overhead via line 21 and transported to the gas-solid, solid-solid separator 30 wherein the material is split into three fractions, a gas fraction, a fines solids fraction the particles of which is e.g. of average diameter less than about 38 microns and a coarse solids fraction, e.g. of average diameter greater than about 38 microns, which is then recycled via line 24 directly to the fluid bed 11 of the reactor (or alternatively, via line 24 to line 9 with the solids make up).

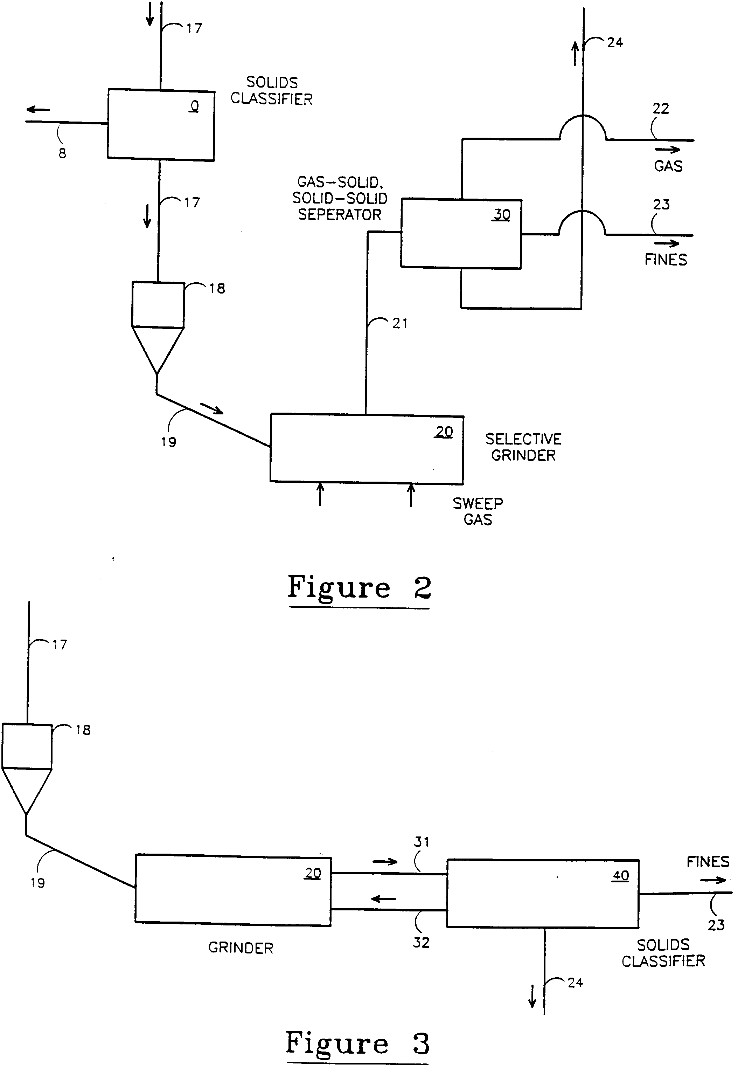

Figure 2 depicts a flow scheme similar to that described by Figure 1, except that the catalyst, or catalyst and other solids withdrawn from the reactor 10 via line 17 are sent to a classifier 0 and split into fractions, a fine fraction which is discarded, or returned to the process via line 8 (and 24, if desired) and a coarse fraction which is transported to the hopper 18 and thereafter processed in the same manner as described by reference to Figure 1.

Referring to Figure 3, there is depicted another scheme wherein a selective grinder 20 and a solids classifier 40 are located in tandem, or side-by-side relationship. Solids withdrawn from the hopper 18 are fed via line 19 into the grinder 20. Ground solids from the grinder 20 are transported via line 31 into the solids classifier 40, and oversize, or coarse solids are recycled to the grinder 20 via line 32 for additional size reduction. Fines solids particles are withdrawn from the solids classifier 40 via line 23, and coarse solids of desired particle size distributions are withdrawn from the solids classifier 40 via line 24 and recycled to the fluidized bed 11 of the reactor 10 (Figure 1).

The following non-limiting example is further exemplary of the process of this invention. In the example percentages and parts are expressed in terms of weight units, and temperatures are given in Fahrenheit degrees, except as otherwise specified.

Example

To the bottom of a fluidized bed reactor operated at temperature of about 1750°F and 345 psig is fed natural gas, oxygen and steam; the oxygen being diluted with steam to provide a molar ratio of steam:oxygen of about 0.4:1 with additional diluent steam admixed with the natural gas. Each mixture is injected via a separate inlet into the fluidized bed of the reactor; the steam-oxygen mixture being added to the bed at a level above that at which the steam-natural gas mixture is added.

Solids particles, inclusive of a nickel-on-alpha alumina catalyst and an alpha alumina diluent, about 85 percent of which are of diameter ranging from 30 to about 110 microns, and having a Davison Attrition Index approximating 2 D.I. are withdrawn from the reactor at a rate of about 0.03 lbs/day, per pound of bed solids.

The solids particles are crushed and broken apart in a Williams air swept roller mill to produce a coarse solids fraction of smaller average particle diameter; less than about 3 percent of the particles being of diameter >90 microns, per lb of solids withdrawn. The fines with diameter <38 microns produced during grinding, are produced at a rate of about 0.2 lb per lb of >90 micron diameter solids destroyed. The particulate solids fraction withdrawn from the fluidized bed, and recycled to the fluidized bed of the reactor, with about 0.1 lb of make up solids, per lb of solids withdrawn being added directly to the reactor, is sufficient to balance the intrinsic rate of agglomeration of the agglomerating solids particles forming in the fluidized bed of the reactor.

Various modifications and changes can be made, as will be apparent to those skilled in this art, without departing the spirit and scope of the invention.

**Claims**

1. A process for the production of hydrogen and carbon monoxide, comprising contacting at high temperature in a reaction zone of a fluidized bed of catalytic metal-on-alumina catalyst solids or mixture thereof and diluent solids, (i) a low molecular weight hydrocarbon feed comprising methane, (ii) a steam feed, and (iii) an oxygen feed;
the process further comprising
withdrawing solids having a Davison Attrition Index, D.I., of less than 6 from the fluidized bed reaction zone at a rate ranging from 0.005 to 0.25 kg/day per kg (0.005 lbs/day to about 0.25 lbs/day, per lb.) of bed solids, treating the particulate solids withdrawn from the fluidized bed of the reaction zone to produce particles of smaller average particle size diameter than that of said withdrawn solids,
separating coarse particles from a more finely divided portion of the treated solids, and recycling a portion of which no more than 15 percent is of particle diameter greater than 90 microns to the reaction zone at a rate sufficient to balance the intrinsic rate of agglomeration of the solids particles within the reaction zone and maintain therein particles of which 80 percent to about 95 percent, based on the weight of solids, are of diameter ranging from 20 microns to 130 microns.

2. The process of claim 1, wherein the said particle diameter is from 30 microns to 110 microns.

3. The process of claim 1 or claim 2, wherein from 0.01 to 0.1 kg/day per kg (0.01 lbs/day to 0.1 lbs/day, per lb.) of bed solids, is withdrawn from the fluidized bed.

4. The process of any preceding claim, wherein no more than 6 percent of the recycled particles are of particle diameter greater than 90 microns.

5. The process of any preceding claim, wherein the strength of the agglomerated particles withdrawn from the fluidized bed of the reaction zone has a Davison Attrition Index, D.I., less than 6.

6. The process of claim 5, wherein the D.I. ranges from 1.5 D.I. to 2.5 D.I.

7. The process of any preceding claim, wherein the recycled solids represent 0.9 to 0.99kg per kg (0.90 lbs to 0.99 lbs per pound) of withdrawn solids, of the total solids originally withdrawn from the fluidized bed of the reaction zone.

8. The process of any preceding claim, wherein the oxygen fed into the fluidized bed of the reaction zone is diluted with a gas to moderate the heat of the bed into which it is injected, providing diluted oxygen feed having a molar ratio of diluent:oxygen ranging from 0.1:1 to 0.6:1.

9. The process of claim 8, wherein the diluent gas is steam.

Figure 1

SOLIDS
CLASSIFIER

0

8

17

17

18

19

GAS—SOLID,
SOLID—SOLID
SEPERATOR

30

24

22

GAS

23

FINES

21

20

SELECTIVE
GRINDER

SWEEP
GAS

## Figure 2

17

18

19

GRINDER

20

31

32

40

FINES

23

SOLIDS
CLASSIFIER

24

## Figure 3

European Patent Office

**EUROPEAN SEARCH REPORT**

Application Number

EP 95 30 6041

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-3 219 281 (JASPER ET AL) <br> * column 1, line 39 - column 2, line 16 * <br> --- | 1,2 | C01B3/44 <br> B01J8/24 |
| A | US-A-3 220 118 (ISCH-WALL ET AL) <br> * claim 1 * <br> --- | 1 | |
| A | US-A-4 681 266 (MASON ET AL) <br> --- | 1 | |
| A | US-A-4 877 550 (GOETSCH ET AL) <br> * claim 1 * <br> --- | 1 | |
| A | EP-A-0 566 785 (THE STANDARD OIL COMPANY) <br> * column 1, line 33 - column 2, line 13 * <br> ----- | 1 | |

**TECHNICAL FIELDS SEARCHED** (Int.Cl.6)

C01B
B01J

The present search report has been drawn up for all claims

| Place of search | Date of completion of the search | Examiner |
|---|---|---|
| BERLIN | 28 December 1995 | Clement, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)